# EUROPEAN PATENT SPECIFICATION

(11) **EP 1 441 475 B1**
(45) Date of publication and mention of the grant of the patent: **11.04.2007**
(21) Application number: 03075237.2
(22) Date of filing: 23.01.2003
(51) Int. Cl.: H04L 12/56

(54) **Means and a method in a packet switched network for forming multicast groups for applications with the same group identity**
Vorrichtungen und ein Verfahren in einem Paketvermittlungsnetz zum Bilden von Multicast-Gruppen für Anwendungen mit derselben Gruppenidentität
Moyens et procédé pour former de groupes de multi-diffusion dans un réseau a commutation par paquets, avec une identité de groupe correspondante de services logiciels

(43) Date of publication of application: 28.07.2004
(73) Proprietor: TELIA AB, 123 86 Farsta (SE)
(72) Inventor: Horowitz, Bruce, SE-149 41 Nynäshamn (SE); Johansson, Stefan, SE-142 62 Trangsund (SE); Magnusson, Nils-Göran, SE-149 45 Nynäshamn (SE); Niccolai, Stefan, SE-142 33 Skogas (SE); Söderström, Gustaf, SE-151 32 Södertälje (SE)
(74) Representative: Lindberg, Olle Nils Olof

(56) References cited:
- WO-A-02/35769
- US-A- 6 154 463
- US-A1- 2002 061 762
- US-A1- 2002 184 529

## Description

### FIELD OF THE INVENTION

The present invention relates generally to the field of internetworking in packet switched networks and cellular packet switched networks and more specifically to a method enabling end users to dynamically create virtual overlay networks forming communication groups wherein at least one terminal is mobile.

The invention also relates to means for carrying out the method.

### BACKGROUND

An end user in a cellular, mobile, packet switched network wanting to send a message to a group of people must today send separate, identical messages to all persons in the group because of the lacking multicast functionality in the cellular packet switched network. This means that the sender is billed for as many messages as there are members in the group and that the cost for the sender increases linearly with the size of the group. This fact could be a hinder for the usage and development of group services.

Establishing a data connection from a mobile terminal in a packet switched mobile network to the Internet typically involves assigning the mobile terminal a temporary public IP-address. The actual IP-address of the terminal inside the cellular packet switched mobile network, which is not valid on the Internet, is typically mapped onto a valid public temporary IP-address in a so called NAT (Network Address Translation) box. This address translation protects the end user from receiving traffic they do not wish and are unwilling to pay for, e.g. in case of a DOS (Denial Of Service) attack. Since the valid temporary IP-address of the mobile terminal is only known to those terminals, or switching nodes, which have actually received traffic from said mobile terminal, the risk of DOS attacks is dramatically decreased.

A drawback with this arrangement, i.e. address translation, is that it also hinders two mobile terminals to establish a real time duplex data connection because the valid public IP-address of a mobile terminal is by definition unknown to all other mobile terminals. This is also why services in mobile packet switched networks today typically are much limited to "one-way services", e.g. SMS (short message service) and e-mail.

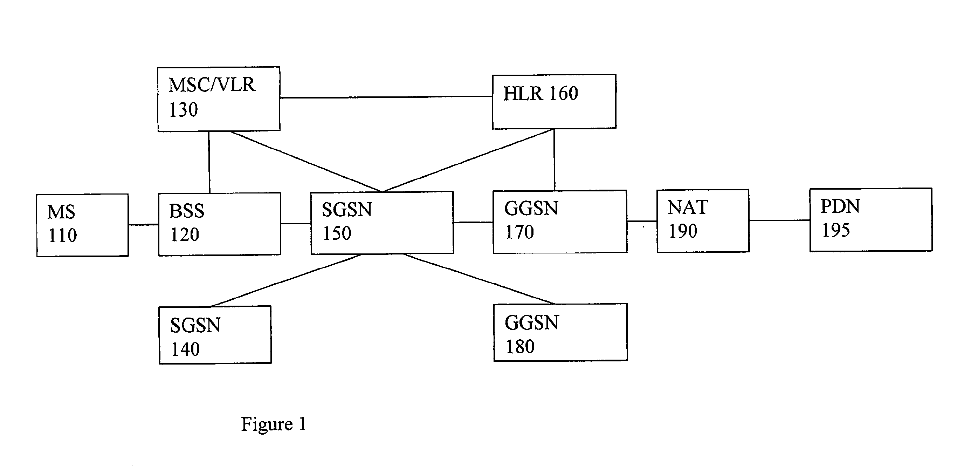

Fig. 1 illustrates a typical GPRS network. When a GSM-terminal is turned on or enters into a network then in short the following takes place: The mobile terminal (MS), 110, contacts a base station system (BSS), 120, which in turn contacts the mobile switching centre (MSC), 130, belonging to that BSS (one MSC is responsible for a large number of BSS:s). There the user registers in a visitor location register (VLR). The VLR also contacts the home location register (HLR), 160, and informs the same of the terminals current position. The terminal can in this way always be reached by a request to the HLR when someone wishes to contact the terminal. This is the procedure in case for circuit switched traffic.

In case of packet switched traffic like in the GPRS network in figure 1, a similar procedure takes place. The mobile terminal, 110, that wants access to packet switched traffic contacts the BSS, 120, which in turn contacts the servicing GPRS support node (SGSN), 150, responsible for the packet switched traffic in this area (in the same way as a MSC in case of circuit switched traffic). The SGSN, 150, negotiates an agreement with the terminal and checks whether the user is authorised to access packet switched data traffic. The SGSN, 150, then contacts a gateway GPRS support node (GGSN), 170, which is a router connected to the Internet. The terminal can then send encapsulated IP-packets over different radio- and property protocols to the SGSN, 150. The SGSN, 150, in turn extracts the packets from these protocols (without looking at the IP-address though) and then tunnels the packets further in an IP-tunnel to the GGSN, 170. In the GGSN the packets are extracted and then routed out on the Internet, PDN (Public Data Network), 195, further in accordance with the IP-address in question. This means that even if a user in the GPRS-network sends a packet to another user in the same GPRS-network (maybe also connected to the same SGSN), the packet will still travel all the way up to the GGSN before it turns back into the network. As mentioned above, most operators today add a node in the GPRS-network that is not specific for GPRS in se. This is the NAT (Network Address Translation), 190. This node allows a terminal inside the network to establish a connection out on the Internet, but not in the opposite way, i.e. a terminal can not be reached from the Internet unless the terminal itself initiates the contact. This arrangement is made in order to protect the terminals from traffic which they have not asked for and are unwilling to pay for (see DOS attacks above). This arrangement thus hinders a terminal in a cellular packet switched network to establish a real time duplex data connection with other mobile terminals in the network. The GGSN node 180 and the SGSN node 140 in figure 1 belong to other GPRS-networks.

A specific type of real time duplex data connection is the so called peer to peer (P2P) connection in which both sides have equal responsibility for initiating, maintaining and terminating the communication session. This type of communication should be viewed in contrast with traditional "master-slave communications," in which the host determines which users can initiate which sessions (client-server-approach). A communications environment that allows all desktop, laptop and terminal computers in the network to act as servers and share their files with all other users on the network is called a peer-to-peer network. This type of sharing was popularised by the now-defunct Napster music service. The fact that the mobile terminals of today become more and more versatile and by no means are restricted to speech-services only, e.g. they have integrated camera and multimedia capabilities and can send and receive data from/to the Internet etc, calls for a need to provide a possibility for these terminals to establish peer-to-peer connections to other mobile terminals as well as to terminals in fixed networks, such as the Internet, in an efficient and secure way.

The service called "Direct connect" provided by Nextel offer a possibility for mobile terminals to establish VoIP (Voice over IP) group connections in a cellular packet switched network. The terminals are equipped with push buttons providing walkie-talkie functionality between terminals in the group. One drawback with Nextel's solution is that the communication groups are fix and defined by the operator. Thus, it is not possible for the users themselves to initiate and dynamically define their own communication groups by their own but they depend on the group assignment made by the operator. Other drawbacks with the Nextel solution is that it is restricted to speech services only and that it require specific Nextel terminals in order to be able to participate in the communication groups.

The service called "Direct connect" provided by Nextel offer a possibility for mobile terminals to establish VoIP (Voice over IP) group connections in a cellular packet switched network. The terminals are equipped with push buttons providing walkie-talkie functionality between terminals in the group. One drawback with Nextel's solution is that the communication groups are fix and defined by the operator. Thus, it is not possible for the users themselves to initiate and dynamically define their own communication groups by their own but they depend on the group assignment made by the operator. Other drawbacks with the Nextel solution is that it is restricted to speech services only and that it require specific Nextel terminals in order to be able to participate in the communication groups.

The document WO 02/35769, A, describes an application communication network arrangement enabling simultaneous communication across the network between several clients joined in at least one client group.

The document US 2002/061762, A1, describes a method and apparatus for determining participants in a net within a group communication network. A message, being for determining whether a communication device wishes to stay a participant in the net, is sent to the communication device. The communication device is listed as participant if the device sends a response to the message within a predetermined time period.

The document US2002/184529, A1, describes a method and system for using virtual identifiers to route communications through a network to destinations. A data communication is registered with a network manager which issues an appropriate virtual identifier in response to registering.

The document US-A-6154463 describes a system and method for multicast conferencing and online discussion groups using a periodically determined close to optimal Steiner spanning tree, suitable for both stationary and/or mobile group members.

There is thus a need to provide an efficient method providing the possibility for end users of arbitrary multimedia terminals in cellular packet switched networks to dynamically create their own communication groups enabling them to share and communicate arbitrary data, such as e.g. speech, music, video etc. by means of real time duplex communication links between them. In particular, it would be advantageous for an operator of a cellular packet switched network to be able to provide such communication services with a high degree of security and reliability. The possibility for an operator of a mobile packet switched network to provide peer-to-peer connections could be of crucial importance for the development and usage of arbitrary real time data services and applications in said network.

### SUMMARY OF THE INVENTION

It is an object of the present invention to provide means and methods allowing end users of arbitrary multimedia terminals in cellular mobile packet switched networks an efficient dynamic creation of real time duplex communication in packet switched networks.

Another object of the present invention is to provide efficient multicast functionality in cellular mobile packet switched networks.

Further objects of the present invention relate to the efficient routing of datagrams and to security aspects such as eavesdrop aspects and reliability of service.

This is achieved according to the present invention by means and methods permitting end users the dynamic creation of overlay virtual networks that establish virtual communication paths between terminals in the packet switched network. According to the invention, all applications sharing a common group identity are allocated virtual communication paths between them. This is made possible by having the terminals and specific virtual switching nodes in the network equipped with data processing means permitting the end users to register a group identity associated with a particular application. The virtual switching nodes then establish an overlay virtual network by defining virtual communication paths between applications sharing the same group identity.

According to the invention, an application running on a terminal can automatically contact the most suitable virtual switching node in the network in order to make routing more efficient and/or reliable.

According to one embodiment of the present invention, the terminal's applications connect to a virtual switching node placed inside the mobile packet switched network. In one embodiment, the virtual switching nodes are placed inside the operators GPRS network between the GGSN and the NAT box, on a private address known by all applications and interconnected through complementary switching nodes on the Internet. In another embodiment, the virtual switching nodes are placed inside the operator's GPRS-network replacing the GGSN. In this embodiment, the virtual switching nodes can be interconnected through the Internet or, in a preferred embodiment, through a private backbone network. This arrangement will provide efficient routing and, in case the virtual switching nodes are interconnected through a private backbone network, a very high degree of security and reliability for the offered group communications and services.

According to another embodiment of the present invention, an application automatically connects to a virtual switching node on the Internet being the nearest or the node providing the most efficient routing. This can be accomplished by letting the application first connect to a server on the Internet having a predefined address and obtain the IP-address of the most suitable virtual switching node to register in based on e.g. geographical considerations or current network load aspects. This arrangement will provide a versatile efficient routing at relatively low cost.

According to the invention, the virtual switching nodes have access to all registered group identities and associated applications in the network and continuously update each other at every new registration or when an application enters or leaves a group.

By adopting the solution according to the present invention, it is possible for end users of arbitrary terminals connectable to a mobile packet switched network and equipped with any operating system to dynamically create their own real time duplex data communication groups. In particular, the invention makes it possible for an end user in a mobile packet switched network to establish a peer-to-peer-connection with other terminals in a packet switched network. The invention also provides efficient multicast functionality in a mobile packet switched network.

Although the invention has been summarised above, the method and arrangement according to the appended independent claims 1, 14, 27 and 30 define the scope of the invention. Various embodiments are further defined in the dependent claims 2-13, 15-26, 28-29 and 31-42.

### BRIEF DESCRIPTION OF THE DRAWINGS

These and other objects and advantages of the invention will become more fully apparent from the following detailed description when read in conjunction with the accompanying drawings with like reference numerals indicating corresponding parts, and wherein:
- Figure 1: illustrates a typical GPRS network connected to the Internet and other GPRS-networks.
- Figure 2: illustrates 3 GPRS subnetworks interconnected through the Internet and the specific Application Level Routers (ALR:s) according to the present invention.
- Figure 3: illustrates a flow chart for the method according to the present invention.
- Figure 4: illustrates how the overlay network according to the present invention is created on top of the physical networks.
- Figure 5: illustrates further the virtual communication paths in the overlay network according to the present invention
- Figure 6: illustrates the functionality of the API:s in the terminals according to the present invention
- Figure 7: illustrates the position of the ALR:s according to one embodiment of the present invention.

### DETAILED DESCRIPTION OF PREFERRED EMBODIMENTS

The present invention will now be described in more detail with reference to accompanying drawings. For illustrative purposes, the invention will be described with the mobile packet switched network being a cellular GPRS-network, however, this is only an illustrative example and the invention can be used in any cellular mobile packet switched network such as an EDGE-, UMTS-network etc.

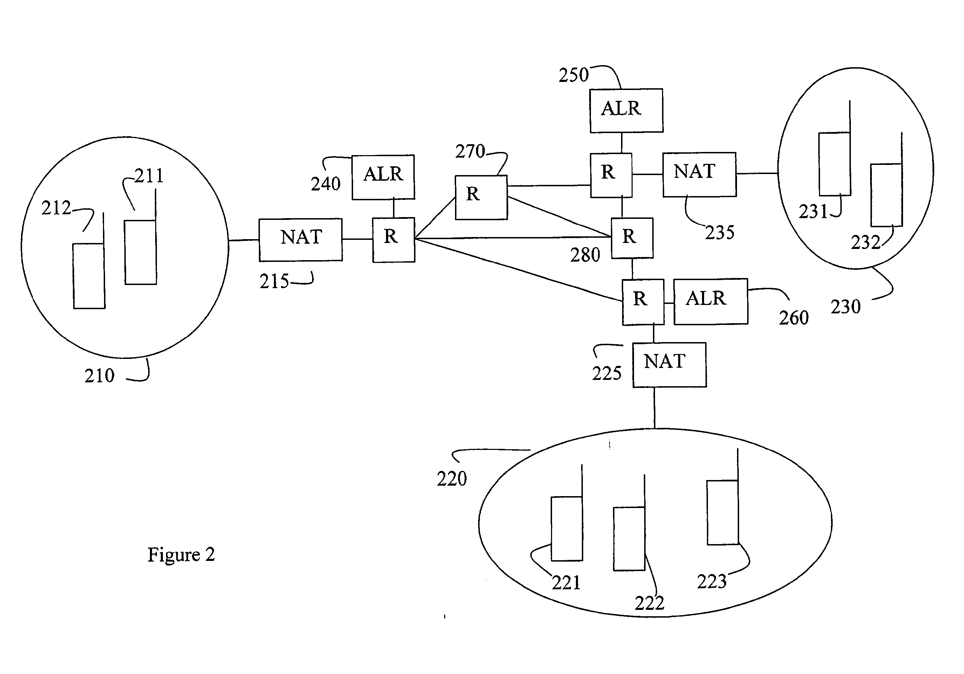

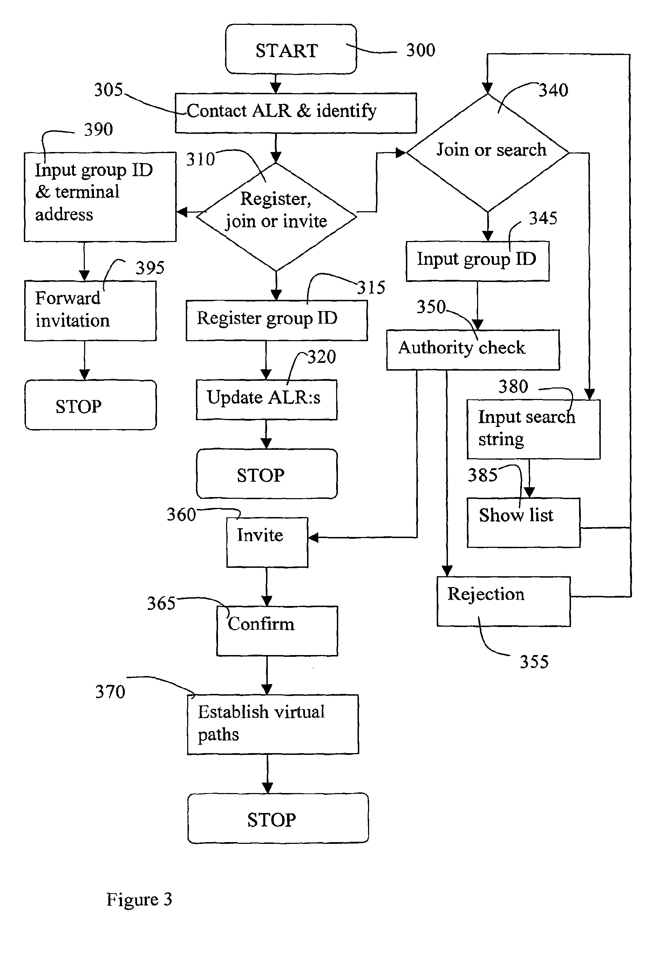

Fig. 2 illustrates how 3 GPRS-networks connected to a part of the Internet may look. The different GPRS networks 210, 220 and 230 can be subnetworks belonging to one or many different operators. The NAT-boxes 215, 225 and 235 are the nodes described above with reference to the GPRS-architecture in figure 1. The overlay virtual network for arbitrary data according to the present invention is basically formed by overlay virtual network switching nodes 240, 250 and 260. These switching nodes route datagrams on an application level, hence they are referred to as Application Level Routers (ALR:s). According to the invention, mobile terminals, e.g. 211, 212, 221, 222, 223 ,231 and 232 in fig 3 as well as fix terminals can reach these ALR:s which are strategically positioned on different places in the network. The ALR:s are typically routers equipped with specific interface and routing functionality, as described below. The routers 270 and 280 in fig. 2 are typical routers on the Internet.

The creation of the overlay virtual network takes place in the following steps, according to the invention with reference to fig. 3 illustrating a flow chart for the method according to the present invention.

With reference to fig. 3, an end user starts an application program on his terminal, e.g. a file sharing or a VoIP application in step 300. In step 305, said application contacts an ALR in the overlay network automatically or under control of the end user, e.g. by a push a button. This can be accomplished by using the API-functionality of the terminal's operating system, defining the communication protocols and enabling the set up of a data connection with the SGSN-node in case of a GPRS network, in combination with an ALR-address known by the application or by letting a server on the Internet on an address known to the application instruct the application what ALR to contact, as described below. The application then identifies itself to the ALR by giving the ALR an "application identifier", which identifies a specific application residing in a specific terminal in the network. The method then proceeds to step 310, wherein the end user can choose between 3 alternatives; to register a new group or to join a group or to invite other end users in the network to join a group.

In case the end user chooses to register a new group in step 310, the method then proceeds to step 315. In step 315 the end user inputs a "group identity" to the ALR and possibly also describing terms which can be used by other users to search for said group, as explained below. For instance, a police officer wanting to create an ad hoc communication group regarding a specific job, could for instance input "Burglary on main street" as a group identity and as describing term input "Speech" indicating the type of application, into the ALR. The ALR associates said group identity with said application by mapping said group identity onto the application identifier associated with said application and adds this new group e.g. in a list or lookup table where all group identities with associated application identities in the network are stored. An application identifier typically consist of one part for identifying the terminal on which the application resides, e.g. the telephone number of the terminal, and one part identifying the application from other applications residing on the terminal, e.g. the word "speech". Then, the method proceeds to step 320, the ALR informs all other ALR:s in the network about the new group so that they can update their corresponding lists or lookup tables. This means that from now on all packets labelled with said group identity originating from a terminal in the network will be routed to all other applications in the network associated with said group identity. In one embodiment according to the invention, the end user, when registering a new group, can also chose to add certain security criteria for entering said group, e.g. in form of a required certificate, password, identity number or similar. The ALR then also informs the other ALR:s about this/these criterion/a in step 320.

In case the end user chooses to join a group in step 310, the method according to the invention proceeds to step 340 wherein the end user has two choices; he can choose to join a group with a group identity known to the end user or alternatively, he can choose to search for a group.

In case the user chooses to join a group with a group identity known to the end user the method according to the invention proceeds to steps 345. In step 345 the end user inputs the known group identity into the ALR. Then the method proceeds to step 350 wherein the ALR searches for the stored group with said group identity and, in case this group is found to have security criteria associated with it for entering, invite the user to input authorisation data such as a certificate or password or identity number or similar and then proceeds to step 350. According to the invention, step 350 is not mandatory and might be bypassed. In case the group identity is missing in the ALR's list of all registered group identities in the network, the ALR informs the user about this in step 345, and the method according to the invention returns to step 340. In case the ALR finds an identical group identity in its list and this group identity doesn't have any associated security criterion for entering said group, then the method according to the invention proceeds to step 360 wherein said end user is invited to join said group. In step 350, the end user inputs the requested authorisation data and the ALR determines if the end user is authorised to join said group or if he should be rejected to join the group by verifying the authorisation data given by the end user. In case the ALR finds the end user to be authorised, the method according to the invention proceeds to step 360 wherein the end user is invited to join said group, otherwise the inventive method proceeds to step 355, wherein the end user is informed about being rejected to join said group and the method thereafter returns to step 345. After step 360, the method proceeds to step 365, wherein the user confirms the ALR's invitation in step 360. From step 365 the method proceeds to step 370 wherein the ALR, possibly together with other ALR.s in the network, sets up a virtual communication path between said application and all other applications in the network sharing said group identity.

In case the user chooses to search for a specific group with a known group identity in step 340 the method according to the invention proceeds to step 380. In step 380 the end user inputs a search string to the ALR, e.g. by giving search terms relating to the group identity and/or associated describing terms. For instance, in case with the police officer above, his colleagues unaware of the exact wording of the group identity, could input "Burglary" and/or "Speech". The method then proceeds to step 385 wherein the ALR replies (to said application) with a list of all groups having a group identity including the word "Burglary" and/or having the word "Speech" associated with them. The method then proceeds by returning to step 340.

In case the end user chooses to invite other end users in the network to join a specific group in step 310, the method according to the invention proceeds to step 390. In step 390, the end user inputs the group identity, e.g. "Beethoven", of an existing group and possibly also a describing term, e.g. "music" and possibly also data regarding authorisation and security aspects for entering the group. The end user also inputs unique terminal identities, e.g. the telephone number of the terminals, E-mail etc, defining the group to which the invitation should be forwarded. Then, in step 395, the ALR forwards the invitation to this defined group, i.e. sending the group identity together with the describing term to said terminals, e.g. by means of an SMS (Short Message Service), E-mail or, alternatively, in case said terminals are connected to the network, through an already established virtual connection.

The method according to the invention described above is typically implemented by adding suitable data processing means in existing routers in the network forming the ALR:s, typically providing a routing on "virtual group level" defined by the group identities and a web-page to which the applications can browse automatically by letting the applications interact with installed API:s (Application Program Interface) in the terminal's operating system, e.g. Symbian, Windows etc., giving the above desired functionality, as known to a person skilled in the art.

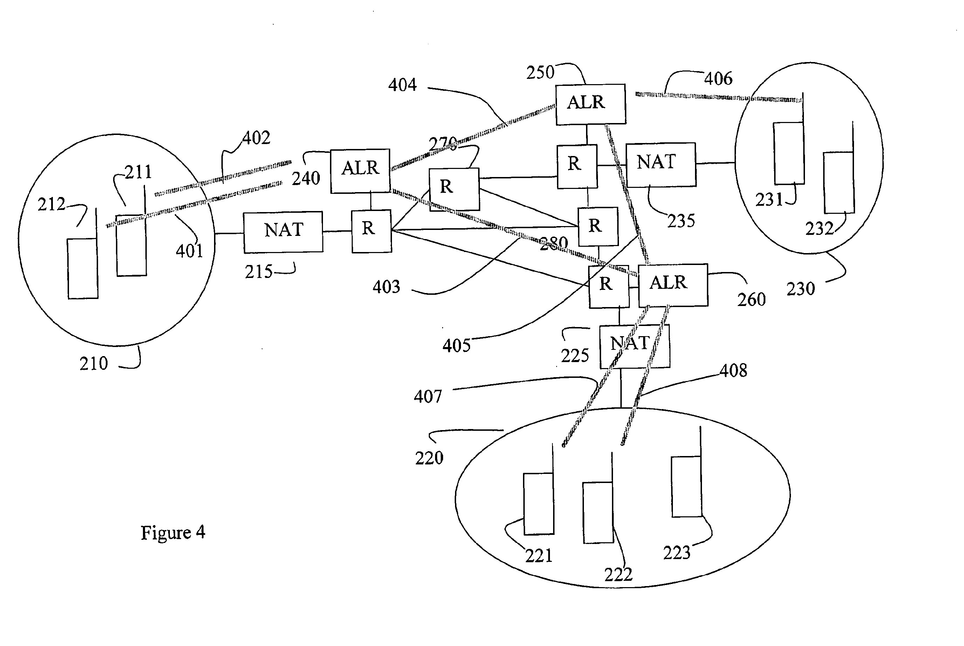

Thus, referring now to fig. 4, an application program, residing in terminal 211, wanting to use the infrastructure of the overlay virtual network contacts the most suitable ALR (normally the same as the geographically nearest, in this case ALR 240). In fig. 4, all elements bear the same reference signs as corresponding elements in fig. 2. The application program identifies itself in this overlay network with an identity being independent of the IP-address of the terminal by registering its identity in the ALR 240. This identity must be unique within the overlay network so that all application programs can use them in order to contact each other. The ALR maps the application program identity onto the current physical IP-address of the terminal in which the application program resides. This means that even if the IP-address of the terminal changes the application program can maintain its address/ID in the overlay network. An application program can thus be externally reached even though the IP-address is being exposed to the Network Address Translation (NAT) procedure since it is the terminal that initiates the contact with the ALR and then continue to be connected in order to receive incoming traffic. The problem with fix identity and not being reachable existing on the IP-level in mobile packet switched networks has thus been solved in this way. According to the invention, an end user can then register a group identity associated with said application in said ALR. The ALR will use this group identity to establish virtual communication paths, illustrated by reference signs 401-408 in fig. 4.

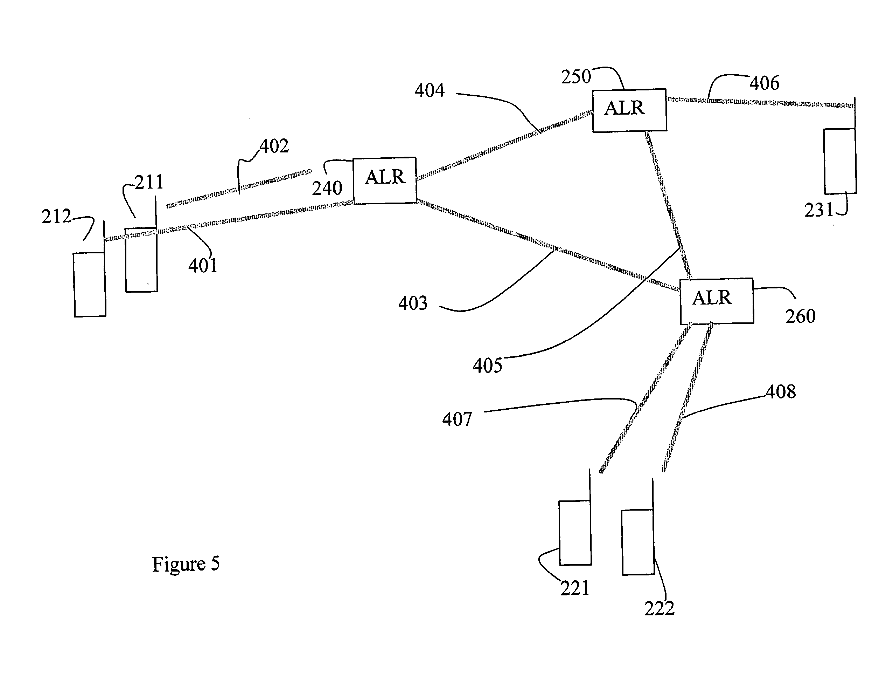

To an application program, the overlay virtual network according to the invention thus looks like the network illustrated in figure 5. In figure 5, the elements bear the same reference signs as corresponding elements in fig. 4. The application programs need not keep track of what happens and exist on the IP-level/network level. The identity of an application program in the overlay network can be created in different ways according to the present invention. In one embodiment, it is created arbitrary, e.g. randomly. This means that the ALR:s in the network must use "flooding" in order to know which ALR a specific application program is coupled to. Flooding means that an ALR sends a request to all other ALR:s in the network to obtain routing information data. According to another embodiment, the identity is created by usage of geographical binding in for instance a hierarchical domain structure similar to e-mail and SIP-addresses (Session Initiation Protocol). Flooding can be avoided in this way since an ALR then knows which ALR to contact by using the domain in the address for the searched application

An ALR has a numerous functions according to the invention. It is responsible for the transfer of data between application programs, i.e. it has a routing function for the data in the overlay network. The routing is based on the identity of the different application programs as mentioned above. An ALR can thus also duplicate data from one application and send it to many receivers in a multicast similar manner. An ALR is further responsible for the applications connected to it. This means that the ALR answers requests regarding the applications connected to it. If a user for instance starts an application program for chatting or sharing images with others the application program can register its service in the ALR. Another application program searching for such services can then ask the overlay network (i.e the ALR network) for such services. One can say that while a computer on IP-level can "publish/present itself" in a subnetwork and state its presence, an application program in the overlay virtual network can, apart from stating its existence, also state what it does. We say that the application registers in the overlay network.

The ALR:s are furthermore responsible for the very central groups which users can create dynamically in/on the overlay network. One can from a concept point of view see the functionality of the present invention as 3 networks on top of each other. The IP-network which is "physically connected" and static in the bottom. On top there is the ALR-network also being a static network in which the nodes normally maintain their position and do not change their connections to one and other. On top of this, temporary network connections, called virtual communication paths, or groups, are created. These overlay networks, or groups, are thus not static. The application programs in such a group then obtain the same functionality as if they would reside in a separate physical network.

An illustrative example of when the present invention could be used is a group of friends sharing information since they trust every group member. Another example can be a personal group where a single user registers different application programs residing on physical different positions. Said user can then reach said application programs e.g. from his mobile terminal if these application programs were distributed so that they belong to the same group. For instance, the user could register a file server application with an accompanying group identity from his stationary computer at home and then store images taken with his mobile terminal equipped with integrated camera function on this file server while travelling around by letting the application program of the mobile terminal share the same group identity.

It is also these groups that could be used for VoIP solutions implementing a kind of walkie-talkie function. In this case, as an alternative embodiment of the present invention, the overlay virtual network could be implemented by means of a single ALR in form of a powerful server solution.

As mentioned above, the terminals using said overlay network don't necessarily be only mobile terminals. A stationary computer can also connect to an ALR and participate. It should also be pointed out that it doesn't necessarily have to be an IP-network "under" the overlay network but could for instance be a Bluetooth network or similar technique.

According to the invention, it is thus the application programs, which together with the ALR:s and the end users that create networks. Thus, a user can start an application program on his terminal that connects to the overlay network with a specific identity and create a temporary network/group. The same user can then start another application program on the same terminal that connects to the overlay network with another identity (ID) and join a completely different network/group.

The overlay network is implemented in the terminals by means of application programs using the preinstalled API (Application Program Interface). It is thus different from application program specific overlay networks like for instance ICQ and MSN messenger which are specific for these specific application programs and which can not be used for the creation of arbitrary applications. In the concept according to the present invention the programmer wishing that the program should use the overlay network use a couple of API:s. These API:s then give access to the above-explained functionality. The programmer doesn't have to know anything about how this overlay network works, what nodes participate, what an ALR is and so on.

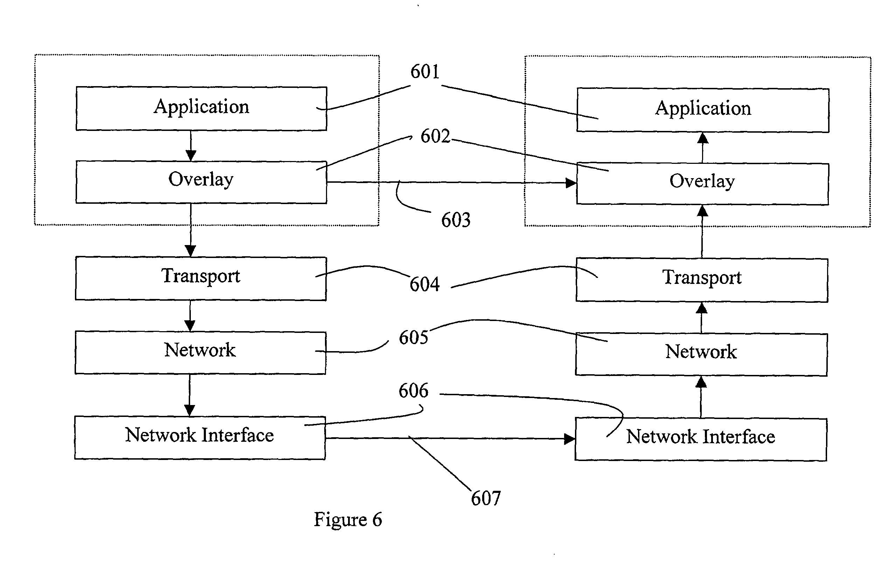

Figure 6 illustrates the routing principle according to the invention n a conceptual level. The application layer in the so called TCP/IP stack is divided into two layers; one application layer, 601, and one overlay layer, 602, see figure 6. According to the invention, the routing of datagrams is defined in the overlay layer, illustrated by arrow 603 in figure 6. The TCP/IP stack typically consist of underlying transport-, 604, network- ,605, and network interface-, 606, layers, as illustrated in figure 6. Arrow 607 illustrates the physical routing path.

The ALR:s can be positioned in different ways according to the present invention. In one embodiment according to the present invention, they are positioned on the Internet as close as possible to the cellular networks in order to obtain an efficient routing in the overlay network. This means that the ALR:s are placed as close as possible to the GGSN in fig. 1. In this embodiment, the mobile terminals will connect to and register in the closest ALR or alternatively, they will connect to and register in the ALR providing the most efficient routing from a network congestion point of view. This is achieved according to the invention by letting the overlay layer in an application running on a mobile terminal automatically contact a server with an established well known address when the application wants to connect to the overlay network. This server then determines which ALR is nearest the application and/or at the moment least loaded by examining the received packets IP-address associated with said application (the server thus has a list of all ALR:s). The server returns the IP-address of this ALR to the overlay layer in the application, which then connects to this ALR. All this takes place according to the functionality that the overlay API:s give the program using them. The programmer knows nothing about how it works or how he connects.

It should be pointed out that this holds both for mobile as well as for stationary terminals/computers (i.e. not only cellular networks) and it also holds irrespectively of whether the mobile terminal is inside a network equipped with a NAT function or not. If the mobile terminal is inside a network with NAT functionality then the only thing that happens is that the server contacted by the terminal sees the address of the NAT box as sender address instead of the actual IP address of the terminal inside the network.

In another embodiment according to the present invention, the ALR:s are positioned on a well-known private address inside the network equipped with NAT functionality. This address typically being identical in all GPRS networks and which the applications always can use. This ALR inside the NAT equipped network is constantly in contact with an ALR on the Internet through the NAT box. This ALR would then be placed between the GGSN and the NAT box in fig. 1.

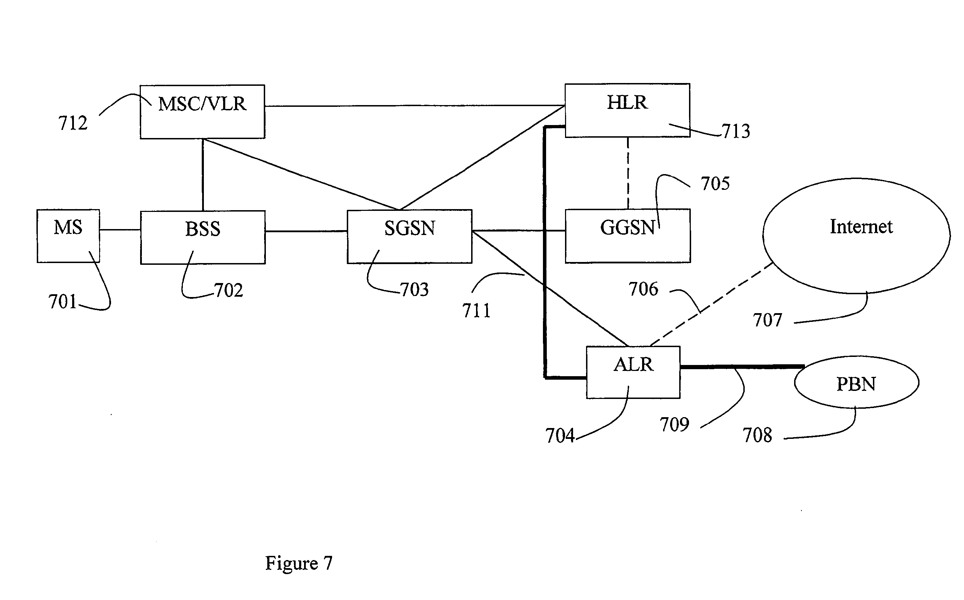

In yet another embodiment according to the present invention, the ALR:s are integrated in the operator's cellular networks in order to offer security and accessibility independent of the Internet. This embodiment is illustrated in fig. 7 showing the position of the ALR:s according to this embodiment.

Referring to figure 7, a mobile terminal, MS, 701, wanting to access the overlay virtual network connects to the SGSN, 703, through the BSS, 702, and asks the SGSN, 703, to contact an ALR, 704, directly instead of the normal procedure that the SGSN, 703, contacts a GGSN, 705. The operator has thus then placed an ALR, 704, directly in the GPRS network, as illustrated by lines 710 and 711 in bold in fig. 7. In this situation, the ALR, 704, will correspond to a GGSN 705, i.e. have the same functionality as the GGSN, 705, but it will route data packets on an application level using the application identities as explained above instead of on an IP level as the GGSN, 705 does. In this embodiment, the ALR:s in different GPRS-networks could basically be interconnected to each other in two different ways; in one embodiment through the Internet, 707, as illustrated by the dashed line 706 in fig. 7 or, according to a preferred embodiment, through a private backbone network (PBN), 708, illustrated by the continuous line 709 in bold in fig. 7. The MSC/VLR, 712 in fig. 7 corresponds to the MSC/VLR 130 in fig. 1 and the HLR 713 in fig. 7 corresponds to the HLR 160 in fig. 1. The interconnection of the ALR:s through a private backbone network provides a network that is physically separated from the Internet offering two major advantages in comparison with the interconnection through the Internet. First, it provides a possibility to significantly increase the possibility for an operator to guarantee the offered services, since possible congestion situations on Internet, hard to predict and control, does not effect the services offered by the operator. Secondly, it provides a higher degree of security regarding eavesdrop etc. since no traffic pass through a public data network. For instance, it is not possible to execute so called DOS attacks towards the ALR:s with the intention to overload them since they are physically unreachable from the public internet. The functionality of the overlay virtual network then becomes independent of possible congestion or overload of the public network, i.e. Internet, which could even temporarily break down.

This could be of crucial importance whether for instance the voice group applications could be used by for instance the police and rescue services that have high demands regarding reliability of service and security.

It is obvious that the described invention may be varied in many ways. Such variations are not to be regarded as a departure from the scope of the invention, and all such modifications as would be obvious to a person skilled in the art are intended to be included within the scope of the following claims.

## Claims

1. An overlay virtual network for a packet switched network to which terminals can connect, **characterised in that**,
said overlay virtual network comprises at least one Application Level Router, ALR, (240, 250, 260) adapted to allow a mobile terminal (211, 212, 221, 222, 223, 231, 232) with an installed application to connect through a cellular packet switched network from a current address, said ALR (240, 250, 260) comprises means adapted for,
- receiving an application identifier and an associated group identity from said terminal;
- mapping said group identity onto said application identifier, and said application identifier onto said current address; and
- routing datagrams labelled with said group identity to said mobile terminal.

2. The overlay network according to claim 1, **characterised in that**,
said ALR (240) comprises means adapted for communicating said application identifier and associated group identity to other ALR:s (250, 260) in the communications system.

3. The overlay networkaccording to claim 1 or 2 **characterised in that**,
said ALR (240, 250, 260) comprises means adapted for establishing at least one virtual communication path between terminals in said system, which terminals have installed applications sharing the same associated group identity.

4. The overlay network according to any of the preceding claims **characterised in that**,
said ALR (240, 250, 260) comprises registration means adapted for allowing an end user of said application to register a new group identity associated with an application connected to said ALR (240, 250, 260).

5. The overlay network according to any of the preceding claims **characterised in that**,
said ALR (240, 250, 260) is equipped with validation means adapted for establishing whether said end user is authorised to join a communication group with a specific group identity.

6. The overlay network according to any of the preceding claims **characterised in that**,
at least one of the at least one ALR (240, 250, 260) is positioned on the Internet.

7. The overlay network according to any of claims 1-5 further **characterised in that**
at least one of the at least one ALR (704) is positioned inside a cellular mobile packet switched network.

8. The overlay network according to claim 7 further **characterised in that**
said mobile packet switched network is a GPRS-network; and
said ALR (704) is placed on a well known private address in said GPRS-network and interconnected with a GGSN and a NAT box.

9. The overlay network according to claim 7 **characterised in that**
said mobile packet switched network is a GPRS-network; and
said ALR functions as a GGSN and routes datagrams at least on an application level.

10. The overlay network according to claim 7 **characterised in that**
all ALR:s (240, 250, 260) forming the system are placed inside at least one cellular mobile packet switched network and interconnected through the Internet (707).

11. The overlay network according to claim 7 **characterised in that**
all ALR:s (240, 250, 260) forming the communications system are placed inside at least one cellular mobile packet switched network and interconnected through a backbone network (708) being physically separated from Internet.

12. The overlay network according to claim 11 **characterised in that**
said mobile packet switched network is a GPRS-network; and
said ALR:s (240, 250, 260) function as a GGSN in the GPRS-network.

13. The overlay network according to claim 3 **characterised in that**
said at least one virtual communication path is exploited to establish a peer to peer connection between at least two applications.

14. A switching node (240, 250, 260) in a packet switched network to which terminals can connect, equipped with an interactive interface allowing an end user to input data to and read data from said switching node **characterised in that**,
said switching node (240, 250, 260) is adapted to allow a mobile terminal (211, 212, 221, 222, 223, 231, 232) with an installed application to connect through a cellular packet switched network from a current address, said switching node comprises means adapted for
- receiving an application identifier and an associated group identity from said terminal;
- mapping said group identity onto said application identifier and
- mapping said application identifier onto said current address; and
- routing datagrams labelled with said group identity to said mobile terminal.

15. The switching node (240, 250, 260) according to claim 14 **characterised by**,
communication means adapted to communicate said application identifier and associated group identity to other switching nodes in the packet switched network.

16. The switching node (240, 250, 260) according to claim 14, **characterised by**,
means adapted for establishing at least one virtual communication path between terminals with installed applications sharing the same associated group identity.

17. The switching node (240, 250, 260) according to any of claims 14 -16
**characterised by**,
registration means adapted for allowing an end user of said application to register a new group identity associated with an application installed in said terminal (211, 212, 221, 222, 223, 231, 232) connected to said switching node.

18. The switching node (240, 250, 260) according to claim 17 further **characterised**
**in that**,
said switching node is equipped with validation means adapted to establish whether said end user is authorised to join a communication group with a specific group identity.

19. The switching node (240, 250, 260) according to any of claims 14-18
**characterised in that**,
it is positioned on the Internet.

20. The switching node (240, 250, 260) according to any of claims 14-18 further
**characterised in that**
it is positioned inside a cellular mobile packet switched network.

21. The switching node (240, 250, 260) according to claim 20 further **characterised**
**in that**
said cellular mobile packet switched network is a GPRS-network; and **in** that
said switching node (704) is placed on a well known private address inside said GPRS-network, interconnected with a GGSN and a NAT box.

22. The switching node (240, 250, 260) according to claim 20 **characterised in that**
said mobile packet switched network is a GPRS-network; and that
said switching node functions as a GGSN.

23. The switching node (240, 250, 260) according to claim 20 **characterised in that**
said switching node (704) is interconnected with corresponding switching nodes positioned inside other cellular mobile packet switched networks through the Internet.

24. The switching node (704) according to claim 20 **characterised in that**
said switching node (704) is interconnected with corresponding switching nodes positioned inside other cellular mobile packet switched networks through a backbone network (708) being physically separated from the Internet.

25. The switching node (704) according to claim 24 **characterised in that**
said mobile packet switched network is a GPRS-network; and **in that**
said switching node (704) functions as a GGSN in said GPRS-network.

26. The switching node (240, 250, 260) according to claim 16 **characterised by**
comprising means adapted for establishing a peer to peer connection between at least two applications in said communications system.

27. A method for the creation of a communications system in a packet switched network to which terminals (211, 212, 221, 222, 223, 231, 232) can connect, **characterised by** comprising the following steps,
- providing at least one Application Level Router, ALR, (240, 250, 260) adapted to allow a mobile terminal with an installed application to connect through a cellular packet switched network from a current address,
- storing an application identifier and an associated group identity from said mobile terminal in said ALR;
- routing datagrams labelled with said group identity in said ALR to said mobile terminal by mapping said group identity onto said application identifier, and said application identifier onto said current address.

28. The method according to claim 27, **characterised in that**,
said ALR (240, 250, 260) communicates said application identifier and associated group identity to other ALR:s (240, 250, 260) in the communications system.

29. The method according to claim 27 or 28 **characterised by**,
establishing at least one virtual communication path between terminals (211, 212, 221, 222, 223, 231, 232) in said system, by having the ALR:s (240, 250, 260) defining virtual communication paths between terminals (211, 212, 221, 222, 223, 231, 232) in the network having installed applications sharing the same associated group identity.

30. The method according to any of the preceding claims 27-29 **characterised in that**,
an end user of an application residing in a terminal (211, 212, 221, 222, 223, 231, 232) connected to an ALR (240, 250, 260) registers a new group identity associated with an application connected to said ALR by interactive communication with said ALR (240, 250, 260), thereby defining at least one new virtual communication path.

31. The method according to any of the preceding claims 27-30 **characterised in that**,
said ALR (240, 250, 260) verifies whether an end user is authorised to join a communication group with a specific group identity.

32. The method according to any of the preceding claims 27-31 **characterised by**,
positioning at least one of the at least one ALR (240, 250, 260) on the Internet.

33. The method according to any of claims 27-31 further **characterised in that**
positioning at least one of the at least one ALR (704) inside a cellular mobile packet switched network.

34. The method according to claim 33 further **characterised in that**
positioning said ALR (704) on a well known private address in a GPRS-network and interconnect said ALR with a GGSN and a NAT box.

35. The method according to claim 33 **characterised in that**
the ALR (704) functions as a GGSN.

36. The method according to claim 33 **characterised in that**
positioning all ALR:s (240, 250, 260) forming the system inside at least one cellular mobile packet switched network and interconnect them through the Internet.

37. The method according to claim 33 **characterised in that**
positioning all ALR:s (240, 250, 260) forming the communications system inside at least one cellular mobile packet switched network and interconnected said ALR:s through a backbone network (708) being physically separated from Internet.

38. The method according to claim 37 **characterised in that**
said ALRs (240, 250, 260) function as GGSNs in a GPRS-network.

39. The method according to claim 29 **characterised in that**
exploiting said at least one virtual communication path to establish a peer to peer connection between at least two applications.

## Patentansprüche

1. Virtuelles Overlay-Netz für ein Paketvermittlungsnetz, mit dem Endgeräte verbunden werden können, **dadurch gekennzeichnet, dass**
- das virtuelle Overlay-Netz wenigstens einen Anwendungsebenen-Router, ALR (240, 250, 260) aufweist, der so ausgebildet ist, dass er ermöglicht, dass ein mobiles Endgerät (211, 212, 221, 222, 223, 231, 232) mit einer installierten Anwendung durch ein Zellen-Paketvermittlungsnetz von einer laufenden Adresse anschließen kann, wobei der ALR (240, 250, 260) Mittel aufweist, die ausgebildet sind für
- Empfangen eines Anwendungskennzeichens und einer zugeordneten Gruppenkennung von dem Endgerät;
- Abbilden der Gruppenkennung auf dem Anwendungskennzeichen und des Anwendungskennzeichens auf der laufenden Adresse; und
- Routing von Datagrammen, die mit der Gruppenkennung markiert sind, zu dem mobilen Endgerät.

2. Overlay-Netz gemäß Anspruch 1, **dadurch gekennzeichnet, dass**
der ALR (204) Mittel aufweist, die für das Kommunizieren des Anwendungskennzeichens und der zugeordneten Gruppenkennung zu den anderen ALRs in dem Kommunikationssystem ausgebildet ist.

3. Overlay-Netz nach Anspruch 1 oder 2, **dadurch gekennzeichnet, dass**
der ALR (240, 250, 260) Mittel aufweist, die für das Errichten von wenigstens einem virtuellen Kommunikationspfad zwischen Endgeräten in dem System ausgebildet ist, wobei die Endgeräte installierte Anwendungen haben, welche sich die gleiche zugeordnete Gruppenkennung teilen.

4. Overlay-Netz nach einem der vorstehenden Ansprüche, **dadurch gekennzeichnet, dass**
der ALR (240, 250, 260) Registrierungsmittel aufweist, die so ausgebildet sind, dass sie ermöglichen, dass ein Endnutzer der Anwendung eine neue Gruppenkennung, die einer an den ALR (240, 250, 260) angeschlossenen Anwendung zugeordnet ist, registrieren kann.

5. Overlay-Netz nach einem der vorstehenden Ansprüche, **dadurch gekennzeichnet, dass**
der ALR (240, 250, 260), mit Validierungsmitteln ausgerüstet ist, die so ausgebildet sind, dass sie erkennen, ob der Endnutzer autorisiert ist, sich einer Kommunikationsgruppe mit einer spezifischen Gruppenkennung anzuschließen.

6. Overlay-Netz nach einem der vorstehenden Ansprüche, **dadurch gekennzeichnet, dass**
wenigstens einer des wenigstens einen ALR (240, 250, 260) im Internet positioniert ist.

7. Overlay-Netz nach einem der Ansprüche 1 bis 5, weiterhin **dadurch gekennzeichnet, dass**
wenigstens einer des wenigstens einen ALR (704) im Inneren eines mobilen Zellen-Paketvermittlungsnetzes positioniert ist.

8. Overlay-Netz nach Anspruch 7, weiterhin **dadurch gekennzeichnet, dass**
das mobile Paketvermittlungsnetz ein GPRS-Netz ist; und
der ALR (704) an einer allgemein bekannten privaten Adresse in dem GPRS-Netz platziert ist und mit einem GGSN und einer NAT-Box verbunden ist.

9. Overlay-Netz nach Anspruch 7, **dadurch gekennzeichnet, dass**
das mobile Paketvermittlungsnetz ein GPRS-Netz ist; und
der ALR als ein GGSN funktioniert und Datagramme wenigstens auf einer Anwendungsebene routet.

10. Overlay-Netz nach Anspruch 7, **dadurch gekennzeichnet, dass**
alle ALRs (240, 250, 260), die das System bilden, im Inneren von wenigstens einem mobilen Zellen-Paketvermittlungsnetz platziert sind und durch das Internet (707) verbunden sind.

11. Overlay-Netz nach Anspruch 7, **dadurch gekennzeichnet, dass**
alle ALRs (240, 250, 260), die das Kommunikationssystem bilden, im Inneren von wenigstens einem mobilen Zellen-Paketvermittlungsnetz platziert sind und durch ein Backbone-Netz (708), das physikalisch vom Internet getrennt ist, verbunden sind.

12. Overlay-Netz nach Anspruch 11, **dadurch gekennzeichnet, dass**
das mobile Paketvermittlungsnetz ein GPRS-Netz ist; und
die ALRs (240, 250, 260) als ein GGSN in dem GPRS-Netz arbeiten.

13. Overlay-Netz nach Anspruch 3, **dadurch gekennzeichnet, dass**
wenigstens ein virtueller Kommunikationspfad genutzt wird, um zwischen wenigstens zwei Anwendungen eine Peer-zu-Peer-Verbindung zu errichten.

14. Schaltknoten (240, 250, 260) in einem Paketvermittlungsnetz, an welches Endgeräte anschließen können, das mit einer interaktiven Schnittstelle ausgerüstet ist, die es einem Endnutzer erlaubt, an dem Schaltknoten Daten einzugeben und von diesem Daten auszulesen, **dadurch gekennzeichnet, dass**
der Schaltknoten (240, 250, 260) so ausgebildet ist, dass er ermöglicht, dass ein Mobilendgerät (211, 212, 221, 222, 223, 231, 232) mit einer installierten Anwendung durch ein Zellen-Paketvermittlungsnetz von einer laufenden Adresse verbunden werden kann, wobei der Schaltknoten Mittel aufweist, die ausgebildet sind für
- das Empfangen eines Anwendungskennzeichens und einer zugehörigen Gruppenkennung von dem Endgerät;
- Abbilden der Gruppenkennung auf dem Anwendungskennzeichen; und
- Abbilden des Anwendungskennzeichens auf der laufenden Adresse; und
- Routen von Datagrammen, die mit der Gruppenkennung markiert sind, zu dem Mobilendgerät.

15. Schaltknoten (240, 250, 260) gemäß Anspruch 14, **gekennzeichnet durch**
Kommunikationsmittel, die so ausgebildet sind, dass sie das Anwendungskennzeichen und die zugeordnete Gruppenidentität zu anderen Schaltknoten in dem Paketvermittlungsnetz kommunizieren können.

16. Schaltknoten (240, 250, 260) nach Anspruch 14, **gekennzeichnet durch**
Mittel, die so ausgebildet sind, dass sie wenigstens einen virtuellen Kommunikationspfad zwischen Endgerät mit installierten Anwendungen, die sich die gleiche zugeordnete Gruppenkennung teilen, errichten können.

17. Schaltknoten (240, 250, 260) nach einem der Ansprüche 14 bis 16, **gekennzeichnet durch**
Registrierungsmittel, die so ausgebildet sind, dass sie es ermöglichen, dass ein Endnutzer der Anwendung eine neue Gruppenkennung zugeordnet zu einer Anwendung, die in dem Endgerät (211, 212, 221, 222, 223, 231, 232) installiert ist, das mit dem Schaltknoten verbunden ist, registrieren kann.

18. Schaltknoten (240, 250, 260) nach Anspruch 17, weiterhin **dadurch gekennzeichnet, dass**
der Schaltknoten mit Validierungsmitteln ausgerüstet ist, die so ausgebildet sind, dass sie erkennen, ob der Endnutzer autorisiert ist, sich an eine Kommunikationsgruppe mit einer spezifischen Gruppenkennung anzuschließen.

19. Schaltknoten (240, 250, 260) nach einem der Ansprüche 14 bis 18, **dadurch gekennzeichnet, dass** er in dem Internet positioniert ist.

20. Schaltknoten (240, 250, 260) nach einem der Ansprüche 14 bis 18, weiterhin **dadurch gekennzeichnet, dass**
er im Inneren eines mobilen Zellen-Paketvermittlungsnetzes positioniert ist.

21. Schaltknoten (240, 250, 260) nach Anspruch 20, weiterhin **dadurch gekennzeichnet, dass**
das mobile Zellen-Paketvermittlungsnetz ein GPRS-Netz ist; und dass
der Schaltknoten (704) an einer allgemein bekannten Privatadresse im Inneren des GPRS-Netzes platziert ist, das mit einem GGSN und einer NAT-Box verbunden ist.

22. Schaltknoten (240, 250, 260) nach Anspruch 20, **dadurch gekennzeichnet, dass**
das mobile Paketvermittlungsnetz ein GPRS-Netz ist; und dass
der Schaltknoten als ein GGSN funktioniert.

23. Schaltknoten (240, 250, 260) nach Anspruch 20, **dadurch gekennzeichnet, dass**
der Schaltknoten (704) mit entsprechenden Schaltknoten, die im Inneren von anderen mobilen Zellen-Paketvermittlungsnetzen positioniert sind, über das Internet verbunden ist.

24. Schaltknoten (704) nach Anspruch 20, **dadurch gekennzeichnet, dass**
der Schaltknoten (704) mit entsprechenden Schaltknoten, die im Inneren von anderen mobilen Zellen-Paketvermittlungsnetzen positioniert sind, über ein Backbone-Netz (704) verbunden ist, welches physikalisch vom Internet getrennt ist.

25. Schaltknoten (704) nach Anspruch 24, **dadurch gekennzeichnet, dass**
das mobile Paketvermittlungsnetz ein GPRS-Netz ist; und dass
der Schaltknoten (704) als ein GGSN in dem GPRS-Netzwerk arbeitet.

26. Schaltknoten (240, 250, 260) nach Anspruch 16, **dadurch gekennzeichnet, dass** er Mittel aufweist, die zum Errichten einer Peer-zu-Peer-Verbindung zwischen wenigstens zwei Anwendungen in dem Kommunikationssystem ausgebildet sind.

27. Verfahren zur Erzeugung eines Kommunikationssystems in einem Paketvermittlungsnetz, an welches Endgeräte (211, 212, 221, 222, 223, 231, 232) anschließen können, **gekennzeichnet durch** die folgenden Schritte:
- Vorsehen von wenigstens einem Anwendungsebenen-Router, ALR (204, 250, 260), der so ausgebildet ist, dass ein Mobilendgerät mit einer installierten Anwendung **durch** ein Zellen-Paketvermittlungsnetz von einer laufenden Adresse angeschlossen werden kann,
- Speichern eines Anwendungskennzeichens und einer zugeordneten Gruppenkennung von dem Mobilendgerät in dem ALR;
- Routen von Datagrammen, die mit der Gruppenkennung in dem ALR markiert sind, zu dem Mobilanschluss der Abbildung der Gruppenkennung auf dem Anwendungskennzeichen und dem Anwendungskennzeichen auf der laufenden Adresse.

28. Verfahren nach Anspruch 27, **dadurch gekennzeichnet, dass**
der ALR (240, 250, 260) das Anwendungskennzeichen und die zugeordnete Gruppenkennung mit anderen ALRs (240, 250, 260) in dem Kommunikationssystem kommuniziert.

29. Verfahren nach Anspruch 27 oder 28, **gekennzeichnet durch**
das Errichten von wenigstens einem virtuellen Kommunikationspfad zwischen Endgeräten (211, 212, 221, 222, 223, 231, 232) in dem System, in dem die ALRs (240, 250, 260) virtuelle Kommunikationspfade zwischen den Endgeräten (211, 212, 221, 222, 223, 231, 232) in dem Netzwerk definieren, welche Anwendungen installiert haben, die die gleiche zugeordnete Gruppenkennung teilen.

30. Verfahren nach einem der vorstehenden Ansprüche 27-29, **dadurch gekennzeichnet, dass**
ein Endnutzer einer Anwendung, die in einem Endgerät (211, 212, 221, 222, 223, 231, 232), welcher mit einem ALR (240, 250, 260) verbunden ist, liegt, eine neue Gruppenkennung zugeordnet zu einer Anwendung, die mit dem ALR verbunden ist, durch interaktive Kommunikation mit dem ALR (240, 250, 260) registriert, wodurch wenigstens ein neuer virtueller Kommunikationspfad definiert wird.

31. Verfahren nach einem der vorstehenden Ansprüche 27-30, **dadurch gekennzeichnet, dass**
der ALR (240, 250, 260) verifiziert, ob ein Endnutzer autorisiert ist, sich an eine Kommunikationsgruppe mit einer spezifischen Gruppenkennung anzuschließen.

32. Verfahren nach einem der vorstehenden Ansprüche 27-31,
**gekennzeichnet durch**
Positionieren von wenigstens einem des wenigstens einem ALR (240, 250, 260) im Internet.

33. Verfahren nach einem der Ansprüche 27-31, weiterhin **gekennzeichnet durch**
Positionieren von wenigstens einem des wenigstens einen ALR (704) im Inneren eines mobilen Zellen-Paketvermittlungsnetzes.

34. Verfahren nach Anspruch 33, weiterhin **gekennzeichnet durch**
Positionieren des ALR (704) an einer allgemein bekannten Privatadresse in einem GPRS-Netz und Verbinden des ALR mit einem GGSN und einer NAT-Box.

35. Verfahren nach Anspruch 33, **dadurch gekennzeichnet, dass**
der ALR (704) als ein GGSN funktioniert.

36. Verfahren nach Anspruch 33, **gekennzeichnet durch**
Positionieren aller ALRs (240, 250, 260), welche das System bilden, im Inneren von wenigstens einem mobilen Zellen-Paketvermittlungsnetz und Verbinden derselben über das Internet.

37. Verfahren nach Anspruch 33, **gekennzeichnet durch**
Positionieren aller ALR (240, 250, 260), die das Kommunikationssystem bilden, im Inneren von wenigstens einem mobilen Zellen-Paketvermittlungsnetz und Verbinden der ALRs **durch** ein Backbone-Netz (708), welches physikalisch vom Internet getrennt ist.

38. Verfahren nach Anspruch 37, **dadurch gekennzeichnet, dass**
die ALRs (240, 250, 260) in einem GPRS-Netz als GGSNs funktionieren.

39. Verfahren nach Anspruch 29, **dadurch gekennzeichnet, dass**
wenigstens ein virtueller Kommunikationspfad genutzt wird, um eine Peer-zu-Peer-Verbindung zwischen wenigstens zwei Anwendungen zu errichten.

## Revendications

1. Réseau virtuel de recouvrement pour un réseau commuté par paquets auquel des terminaux peuvent être connectés, **caractérisé en ce que**
le dit réseau virtuel de recouvrement comprend au moins un routeur au niveau application, ALR, (240, 250, 260) prévu pour permettre à un terminal mobile (211, 212, 221, 222, 223, 231, 232) avec une application installée de se connecter par l'intermédiaire d'un réseau cellulaire à commutation par paquets à partir d'une adresse courante, le dit ALR (240, 250, 260) comprenant des moyens prévus pour :
- la réception d'un identificateur d'application et d'une identité de groupe associée en provenance du dit terminal ;
- la mise en correspondance de la dite identité de groupe sur le dit identificateur d'application, et du dit identificateur d'application sur la dite adresse courante ; et
- l'acheminement de datagrammes étiquetés avec la dite identité de groupe au dit terminal mobile.

2. Réseau de recouvrement selon la revendication 1,
**caractérisé en ce que**
le dit ALR (240) comprend des moyens prévus pour communiquer le dit identificateur d'application et la dite identité de groupe associée à d'autres ALR (250, 260) dans le système de communication.

3. Réseau de recouvrement selon la revendication 1 ou 2,
**caractérisé en ce que**
le dit ALR (240, 250, 260) comprend des moyens prévus pour établir au moins un chemin de communication virtuel entre terminaux dans le dit système, ces terminaux comportant des applications installées qui partagent la même identité de groupe associée.

4. Réseau de recouvrement selon une quelconque des revendications précédentes, **caractérisé en ce que**
le dit ALR (240, 250, 260) comprend des moyens d'enregistrement prévus pour permettre à un utilisateur final de la dite application d'enregistrer une nouvelle identité de groupe associée à une application connectée au dit ALR ( (240, 250, 160).

5. Réseau de recouvrement selon une quelconque des revendications précédentes, **caractérisé en ce que**
le dit ALR (240, 250, 260) est équipé avec des moyens de validation prévus pour déterminer si le dit utilisateur final est ou non autorisé à se joindre à un groupe de communication avec une identité de groupe spécifique.

6. Réseau de recouvrement selon une quelconque des revendications précédentes, **caractérisé en ce que**
au moins un du dit au moins un ALR (240, 250, 260) est positionné sur le réseau Internet.

7. Réseau de recouvrement selon une quelconque des revendications 1 à 5, **caractérisé en ce que**
au moins un du dit au moins un ALR (704) est positionné dans un réseau mobile cellulaire à commutation par paquets.

8. Réseau de recouvrement selon la revendication 7,
**caractérisé en ce que**
le dit réseau mobile à commutation par paquets est un réseau GPRS ; et
le dit ALR (704) est placé sur une adresse privée bien connue dans le dit réseau GPRS et interconnecté avec un GGSN et une boîte NAT.

9. Réseau de recouvrement selon la revendication 7,
**caractérisé en ce que**
le dit réseau mobile à commutation par paquets est un réseau GPRS ; et
le dit ALR fonctionne comme un GGSN et achemine des datagrammes au moins sur un niveau d'application.

10. Réseau de recouvrement selon la revendication 7,
**caractérisé en ce que**
tous les ALR (240, 250, 260) formant le système de communication sont placés à l'intérieur d'au moins un réseau mobile cellulaire à commutation par paquets et ils sont interconnectés par l'intermédiaire du réseau Internet (707).

11. Réseau de recouvrement selon la revendication 7,
**caractérisé en ce que**
tous les ALR (240, 250, 260) formant le système de communication sont placés à l'intérieur d'au moins un réseau mobile cellulaire à commutation par paquets et ils sont interconnectés par l'intermédiaire d'une épine dorsale (708) physiquement séparée du réseau Internet.

12. Réseau de recouvrement selon la revendication 11,
**caractérisé en ce que**
le dit réseau mobile à commutation par paquets est un réseau GPRS ; et
les dits ALR5 (240, 250, 260) fonctionnent comme un GGSN dans le réseau GPRS.

13. Réseau de recouvrement selon la revendication 3,
**caractérisé en ce que**
le dit au moins un chemin de communication virtuel est exploité de manière à établir une connexion de poste à poste entre au moins deux applications.

14. Noeud de commutation (240, 250, 260) dans un réseau à commutation par paquets auquel des terminaux peuvent se connecter, équipé d'une interface interactive permettant à un utilisateur final d'entrer des données et de lire des données à partir du dit noeud de commutation, **caractérisé en ce que**
le dit noeud de commutation (240, 250, 260) est prévu pour permettre à un terminal mobile (211, 212, 221, 222, 223, 231, 232) avec une application installée de se connecter par l'intermédiaire d'un réseau cellulaire à commutation par paquets à partir d'une adresse courante, le dit noeud de commutation comprend des moyens prévus pour
- la réception d'un identificateur d'application et d'une identité de groupe associée en provenance du dit terminal ;
- la mise en correspondance de la dite identité de groupe sur le dit identificateur d'application, et
- la mise en correspondance du dit identificateur d'application sur la dite adresse courante ; et
- l'acheminement de datagrammes étiquetés avec la dite identité de groupe au dit terminal mobile.

15. Noeud de commutation (240, 250, 260) selon la revendication 14, **caractérisé par**
des moyens de communication prévus pour communiquer le dit identificateur d'application et l'identité de groupe associée à d'autres noeuds de commutation dans le réseau à commutation par paquets.

16. Noeud de commutation (240, 250, 260) selon la revendication 14, **caractérisé par**
des moyens prévus pour établir au moins un chemin de communication virtuel entre des terminaux avec des applications installées partageant la même identité de groupe associée.

17. Noeud de commutation (240, 250, 260) selon une quelconque des revendications 14 à 16, **caractérisé par**
des moyens d'enregistrement prévus pour permettre à un utilisateur final de la dite application d'enregistrer une nouvelle identité de groupe associée à une application installée dans le dit terminal (211, 212, 221, 222, 223, 231, 232) connecté au dit noeud de commutation.

18. Noeud de commutation (240, 250, 260) selon la revendication 17, **caractérisé en outre en ce que**
le dit noeud de commutation est équipé avec des moyens de validation prévus pour déterminer si le dit utilisateur final est ou non autorisé à se joindre à un groupe de communication avec une identité de groupe spécifique.

19. Noeud de commutation (240, 250, 260) selon une quelconque des revendications 14 à 18, **caractérisé en outre en ce que**
il est positionné sur le réseau Internet.

20. Noeud de commutation (240, 250, 260) selon une quelconque des revendications 14 à 18, **caractérisé en outre en ce que**
il est positionné à l'intérieur d'un réseau mobile cellulaire à commutation par paquets.

21. Noeud de commutation (240, 250, 260) selon la revendication 20, **caractérisé en outre en ce que**
le dit réseau mobile cellulaire à commutation par paquets est un réseau GPRS ; et
le dit noeud de commutation (704) est placé sur une adresse privée bien connue à l'intérieur du dit réseau GPRS, et interconnecté avec un GGSN et une boîte NAT.

22. Noeud de commutation (240, 250, 260) selon la revendication 20, **caractérisé en ce que**
le dit réseau mobile à commutation par paquets est un réseau GPRS ;: et
le dit noeud de commutation fonctionne comme un GGSN.

23. Noeud de commutation (240, 250, 260) selon la revendication 20, **caractérisé en ce que**
le dit noeud de commutation (704) est interconnecté avec des noeuds de commutation correspondants positionnés à l'intérieur d'autres réseaux mobiles cellulaires à commutation par paquets, par l'intermédiaire du réseau Internet.

24. Noeud de commutation (704) selon la revendication 20,
**caractérisé en ce que**
le dit noeud de commutation (704) est interconnecté avec des noeuds de commutation correspondants positionnés à l'intérieur d'autres réseaux mobiles cellulaires à commutation par paquets, par l'intermédiaire d'une épine dorsale (708) physiquement séparée du réseau Internet.

25. Noeud de commutation (704) selon la revendication 24,
**caractérisé en ce que**
le dit réseau mobile à commutation par paquets est un réseau GPRS ; et
le dit noeud de commutation (704) fonctionne comme un GGSN dans le dit réseau GPRS.

26. Noeud de commutation (240, 250, 260) selon la revendication 16, **caractérisé en ce que**
il comprend des moyens pour établir une connexion poste à poste entre au moins deux applications dans le dit système de communication.

27. Procédé pour la création d'un système de communication dans un réseau à commutation par paquets auquel des terminaux (211, 212, 221, 222, 223, 231, 232) peuvent se connecter, **caractérisé en ce qu'**il comprend les étapes suivantes :
- utilisation d'un routeur au niveau application, ALR, (240, 250, 260) prévu pour permettre à un terminal mobile ayant une application installée de se connecter par l'intermédiaire d'un réseau cellulaire à commutation par paquets à partir d'une adresse courante,
- stockage d'un identificateur d'application et d'une identité de groupe associée à partir du dit terminal mobile dans le dit ALR ;
- acheminement de datagrammes étiquetés avec la dite identité de groupe dans le dit ALR vers le dit terminal mobile par mise en correspondance de la dite identité de groupe sur le dit identificateur d'application, et du dit identificateur d'application sur la dite adresse courante.

28. Procédé selon la revendication 27, **caractérisé en ce que** le dit ALR (240, 250, 260) communique le dit identificateur d'application et la dite identité de groupe associée à d'autres ALR (240, 250, 260) dans le système de communication.

29. Procédé selon la revendication 27 ou 28, **caractérisé par**
l'établissement d'au moins un chemin de communication virtuel entre terminaux (211, 212, 221, 222, 223, 231, 232) dans le dit système en ce que les ALR (240, 250, 260) définissent des chemins de communication virtuels entre terminaux (211, 212, 221 , 222, 223, 231 , 232) dans le réseau qui possèdent des applications installées partageant la même identité de groupe associée.

30. Procédé selon une quelconque des revendications précédentes 27 à 29, **caractérisé en ce que**
un utilisateur final d'une application résidant dans un terminal (211, 212, 221, 222, 223, 231, 232) connecté à un ALR (240, 250, 260) enregistre une nouvelle identité de groupe associée à une application connectée au dit ALR par communication interactive avec le dit ALR (240, 250, 260), afin de définir au moins un nouveau chemin de communication virtuel.

31. Procédé selon une quelconque des revendications précédentes 27 à 30, **caractérisé en ce que**
le dit ALR (240, 250, 260) vérifie si un utilisateur final est autorisé ou non à se joindre à un groupe de communication avec une identité de groupe spécifique.

32. Procédé selon une quelconque des revendications précédentes 27 à 31, **caractérisé par**
le positionnement d'au moins un du dit au moins un ALR (240, 250, 260) sur le réseau Internet.

33. Procédé selon une quelconque des revendications 27 à 31, **caractérisé en outre par**
le positionnement d'au moins un du dit au moins un ALR (704) à l'intérieur d'un réseau mobile cellulaire à commutation par paquets.

34. Procédé selon la revendication 33, **caractérisé en outre par**
le positionnement du dit ALR (704) sur une adresse privée bien connue dans un réseau GPRS et l'interconnexion du dit ALR avec un GGSN et une boîte MAT.

35. Procédé selon la revendication 33, **caractérisé en ce que**
le dit ALR (704) fonctionne comme un GGSN.

36. Procédé selon la revendication 33, **caractérisé par**
le positionnement de tous les ALR (240, 250, 260) formant le système à l'intérieur d'au moins un réseau mobile cellulaire à commutation par paquets et leur interconnexion par l'intermédiaire du réseau Internet.

37. Procédé selon la revendication 33, **caractérisé par**
le positionnement de tous les ALR (240, 250, 260) formant le système de communication à l'intérieur d'au moins un réseau mobile cellulaire à commutation par paquets et l'interconnexion des dits ALR par l'intermédiaire d'une épine dorsale (708) physiquement séparée du réseau Internet.

38. Procédé selon la revendication 37, **caractérisé en ce que**
les dits ALR (240, 250, 260) fonctionnent comme des GGSN dans un réseau GPRS.

39. Procédé selon la revendication 29, **caractérisé par**
l'exploitation du dit au moins un chemin de communication virtuel pour établir une connexion poste à poste entre au moins deux applications.
